# DEMANDE DE BREVET EUROPEEN

(11) **EP 3 587 834 A1**
(43) Date de publication de la demande: **01.01.2020**
(21) Numéro de dépôt: 19179093.0
(22) Date de dépôt: 07.06.2019
(51) Int. Cl.: F16B 5/10

(54) **SYSTÈME DE FIXATION ANTI-AMIANTE D'UN ARTICLE SUR UNE PAROI, APPAREIL DE CHAUFFAGE ÉLECTRIQUE ET PROCÉDÉ DE MONTAGE**

(30) Priorité: 29.06.2018 FR 1870777
(71) Demandeur: VERELEC, 38950 St Etienne de St Geoirs (FR)
(72) Inventeur: JOUBERT, Frédéric, 38590 St Etienne de St Geoirs (FR)
(74) Mandataire: Verriest, Philippe

(57) **Abrégé**

Il est décrit un système (14) comprenant un organe de liaison (16A) adapté pour être monté sur une paroi (12) et un organe de liaison (16B) adapté pour être monté sur un article (10) à fixer à la paroi (12). Les organes (16A, 16B) sont susceptibles de coopérer pour permettre le montage et la fixation de l'article (10) sur la paroi (12). L'organe de liaison (16A) destiné à être monté sur la paroi (12) comprend une structure de support (34) principale de fixation à la paroi (12) réalisée au moins partiellement dans un matériau présentant des propriétés optiques qui permettent de voir la paroi (12) au travers de la structure lorsque l'organe (16A) est monté sur la paroi (12). Il est également décrit un appareil de chauffage électrique (10) et un procédé de montage.

## Description

### Domaine technique

La présente invention concerne d'abord, selon un aspect, un système pour fixer un article sur une paroi, du type comprenant une paire d'organes de liaison, l'un des organes de liaison étant adapté pour être monté sur la paroi et l'autre des organes de liaison étant adapté pour être monté sur l'article, les organes de liaison étant susceptibles de coopérer pour permettre le montage et la fixation de l'article sur la paroi, l'organe de liaison destiné à être monté sur la paroi comprenant une structure de support de fixation de l'organe à la paroi réalisée au moins partiellement dans un matériau présentant des propriétés optiques qui permettent de voir la paroi au travers de la structure lorsque l'organe est monté sur la paroi.

Elle s'applique plus particulièrement, mais non exclusivement, à la fixation d'un article, tel qu'un radiateur, une chaudière à gaz ou autres articles électroménagers, sur une paroi tel qu'une cloison ou paroi verticale.

La présente invention concerne également, selon un autre aspect, un appareil de chauffage électrique, notamment un panneau chauffant radiant, comprenant une face arrière destinée à être montée sur une paroi.

La présente invention concerne aussi, selon un autre aspect, un procédé de montage d'un appareil de chauffage électrique, notamment un panneau chauffant radiant, sur une paroi par l'intermédiaire d'un système comprenant une paire d'organes de liaison où l'un des organes de liaison est adapté pour être monté sur la paroi et comprend une structure de support de fixation de l'organe à la paroi réalisée au moins partiellement dans un matériau présentant des propriétés optiques qui permettent de voir la paroi au travers de la structure lorsque l'organe est monté sur la paroi et où l'autre des organes de liaison est adapté pour être monté sur l'appareil de chauffage, procédé dans lequel l'appareil de chauffage électrique comprend une face arrière destinée à être montée sur la paroi et comporte l'organe de liaison qui est adapté à être monté sur l'appareil de chauffage, procédé dans lequel les organes de liaison sont susceptibles de coopérer entre eux pour permettre le montage et la fixation de l'appareil de chauffage électrique sur la paroi.

### Technique antérieure

Généralement, pour la fixation d'un appareil de chauffage électrique, le système d'attache comprend divers éléments de fixation tels que des vis agencées selon une disposition qui est définie essentiellement par la forme et le poids de l'appareil de chauffage lui-même. Ainsi, lors du remplacement d'un tel appareil, il est souvent nécessaire de réaliser de nouveaux percements. Ceci est particulièrement fréquent dans les bâtiments anciens présentant une installation de chauffage de nature électrique, car le facteur de forme des radiateurs électriques a considérablement évolué ces dernières années.

Or, la réglementation actuelle prévoit notamment que, lors de travaux de rénovation d'un bâtiment ancien, avant tout percement ou enlèvement de matériaux sur la structure, le propriétaire du bâtiment doit s'assurer de l'absence d'amiante.

Cette contrainte réglementaire génère de nombreuses difficultés lors des travaux de rénovation et potentiellement un surcoût important lorsque le bâtiment ancien présente une structure à base d'amiante.

### Résumé de l'invention

Un objet de l'invention est de proposer une solution de fixation d'un article, notamment un appareil de chauffage électrique, sur une paroi, qui permette de répondre aux problématiques listées précédemment.

Notamment, Il existe donc un besoin d'un système pour fixer un article, notamment un appareil de chauffage électrique, sur une paroi, un appareil de chauffage électrique et un procédé de montage de l'appareil de chauffage électrique sur la paroi qui permettent d'éviter autant que possible d'avoir à réaliser de nouveaux percements dans la paroi tout en assurant une fixation de l'article sur la paroi qui soit précise, fiable, aisée à mettre en oeuvre et solide, même dans le cas d'articles lourds.

A cet effet, il est proposé un système pour fixer un article sur une paroi, du type comprenant une paire d'organes de liaison, l'un des organes de liaison étant adapté pour être monté sur la paroi et l'autre des organes de liaison étant adapté pour être monté sur l'article, les organes de liaison étant susceptibles de coopérer pour permettre le montage et la fixation de l'article sur la paroi, l'organe de liaison destiné à être monté sur la paroi comprenant une structure de support de fixation de l'organe à la paroi réalisée au moins partiellement dans un matériau présentant des propriétés optiques qui permettent de voir la paroi au travers de la structure lorsque l'organe est monté sur la paroi, le système comprenant des moyens de rattrapage d'un jeu angulaire correspondant à la différence entre une position initiale angulaire de montage de l'article sur la paroi et une position angulaire finale, les moyens de rattrapage comprennent des moyens d'engagement axial des deux organes de liaison pour leur positionnement relatif dans une position angulaire d'engagement, et des moyens de couplage axial des deux organes entre eux par une liaison rotative définie à partir de la position d'engagement et sur une amplitude angulaire définie.

Grâce à un tel système, il est possible de mettre à profit les percements existants dans le cas d'une rénovation d'un bâtiment en positionnant la structure de support de l'organe de liaison sur la partie de la paroi présentant des percements. Il suffit alors à l'opérateur de positionner des repères sur la structure de support à l'emplacement des percements existants. Ceci est rendu possible grâce à la propriété de la structure de support qui permet de voir au travers. La position angulaire d'engagement peut être définie initialement de façon grossière sans que cela ne conditionne le résultat final. Le travail de l'opérateur s'en trouve alors facilité car il n'a pas à se préoccuper du positionnement précis de l'article lors de la fixation de l'article sur la paroi. En effet, généralement l'installation d'un article lourd, et cela concerne particulièrement un appareil de chauffage électrique de type un panneau chauffant radiant qui est particulièrement concerné par les problématiques à résoudre, sur une paroi concentre tous les efforts de l'opérateur sur le portage de l'article et non sur son positionnement précis. Bien entendu, bien que parfaitement adaptée à l'installation d'un panneau chauffant radiant, l'invention s'applique également à d'autres articles tels que notamment par exemple une chaudière à gaz. Avantageusement, une fois les deux organes de liaison engagés l'un dans l'autre, l'article est suspendu à la paroi par un couplage axial. Le poids de l'article est alors compensé par le système de fixation.

Le système peut comporter l'une ou plusieurs des caractéristiques suivantes, prises isolément ou en combinaison.

La structure de support est réalisée dans une matière plastique sensiblement transparente ou translucide.

La paire d'organes de liaison comprend un mécanisme d'accouplement à baïonnette.

L'un des organes de liaison comprend un anneau de liaison et l'autre des organes de liaison comprend une culasse de liaison comprenant une cavité et des moyens de retenue axiale de l'anneau à l'intérieur de la cavité selon un fonctionnement de type à baïonnette.

L'anneau et la structure de support sont formées d'une seule pièce.

L'anneau et/ou la culasse sont réalisés dans une matière plastique résistante à la traction et à la chaleur.

L'anneau comprend une pluralité d'oreilles de liaison et la cavité comprend une pluralité d'épaulements de liaison, la cavité délimitant une découpe conformée pour coopérer avec l'anneau par engagement.

Les oreilles et les épaulements respectifs sont orientés selon une symétrie radiale ou une symétrie axiale.

La structure de support a une forme générale de plaque.

Pour répondre aux problématiques précitées, il est également proposé un appareil de chauffage électrique, notamment un panneau chauffant radiant, comprenant une face arrière destinée à être montée sur une paroi et comportant l'organe de liaison du système de fixation précité qui est adapté pour être monté sur l'article.

l'avantage de cette solution est d'offrir un appareil de chauffage électrique, et notamment un panneau chauffant radiant dont le poids est connu pour être important et impliquant particulièrement les problématiques précitées, ayant un système de fixation qui permette d'une part d'éviter de nouveaux percements dans la paroi tout en assurant une fixation précise, fiable, aisée à mettre en oeuvre et solide de l'appareil de chauffage électrique, tout cela en dépit d'un poids potentiellement très élevé comme c'est le cas pour un panneau chauffant radiant, et d'autre part d'offrir un moyen de réglage angulaire, permettant que la position angulaire d'engagement puisse être définie initialement de façon grossière sans que cela ne conditionne le résultat final, le travail de l'opérateur s'en trouvant alors facilité car il n'a pas à se préoccuper du positionnement précis de l'appareil de chauffage électrique lors de la fixation de l'appareil de chauffage électrique.

Pour répondre aux problématiques précitées, il est également proposé un procédé de montage d'un appareil de chauffage électrique, notamment un panneau chauffant radiant, sur une paroi par l'intermédiaire d'un système comprenant une paire d'organes de liaison où l'un des organes de liaison est adapté pour être monté sur la paroi et comprend une structure de support de fixation de l'organe à la paroi réalisée au moins partiellement dans un matériau présentant des propriétés optiques qui permettent de voir la paroi au travers de la structure lorsque l'organe est monté sur la paroi et où l'autre des organes de liaison est adapté pour être monté sur l'appareil de chauffage, procédé dans lequel l'appareil de chauffage électrique comprend une face arrière destinée à être montée sur la paroi et comporte l'organe de liaison qui est adapté à être monté sur l'appareil de chauffage électrique, procédé dans lequel les organes de liaison sont susceptibles de coopérer entre eux pour permettre le montage et la fixation de l'appareil de chauffage électrique sur la paroi et comprenant les étapes suivantes :
- on positionne provisoirement la structure de support sur la paroi,
- on repère d'éventuels trous existants de la paroi en regardant au travers de la structure de support,
- on marque la position des trous existants sur la structure de support,
- on retire la structure de support et on perce des trous sur les marquages,
- on fixe la structure de support sur la paroi en faisant coïncider les trous percés dans la structure et les trous existants,
- on monte l'appareil de chauffage électrique avec le système.

### Brève description des dessins

D'autres caractéristiques et avantages de l'invention apparaîtront à la lumière de la description qui suit, faite en référence aux dessins annexes dans lesquels :
- La figure 1 représente une vue schématique en perspective d'un article fixé à une paroi par l'intermédiaire d'un système selon l'invention.
- La figure 2 représente une vue schématique en perspective de l'article de la figure 1 avant sa fixation sur la paroi.
- La figure 3 représente une vue schématique d'une face avant du premier organe de liaison du système de la figure 1.
- La figure 4 représente une vue schématique de côté du premier organe de liaison représenté sur la figure 3.
- La figure 5 représente une vue schématique d'une face avant du deuxième organe de liaison du système de la figure 1.
- La figure 6 représente une vue schématique de côté du deuxième organe de liaison représenté sur la figure 5.

### Description des modes de réalisation

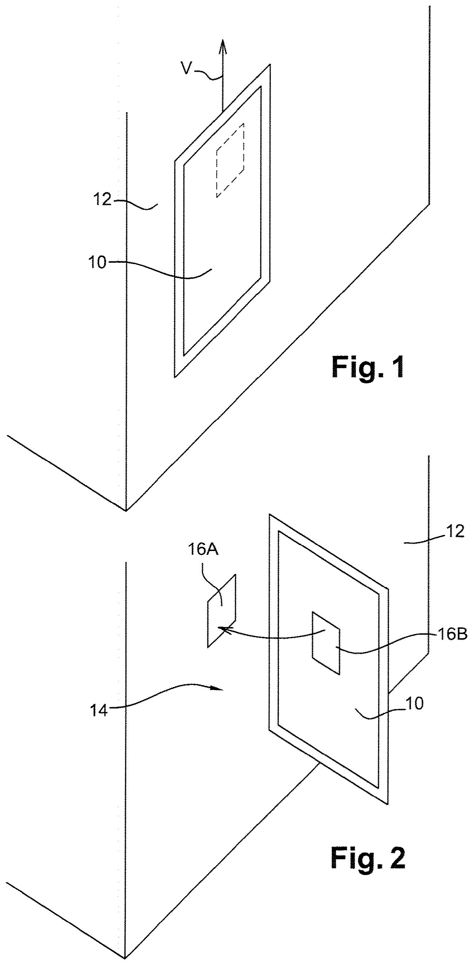

On a représenté sur la figure 1 un article, et plus spécifiquement un panneau de chauffage électrique radiant, fixé sur une paroi ayant une orientation sensiblement verticale, par exemple une cloison murale. L'article est désigné par la référence générale 10 et la paroi est désignée par la référence générale 12. La paroi 12 est par exemple une cloison verticale d'un local. Cet article 10 est positionné dans une position angulaire initiale par rapport à une orientation de référence, par exemple la verticale de la paroi 12. Cette verticale est signalée par une flèche V sur la figure 1.

De préférence, l'article 10 peut notamment être constitué par un panneau chauffant radiant, tel que par exemple celui décrit dans le document FR3 026471A1. En effet, le système et le procédé de montage qui vont être décrits plus loin sont particulièrement adaptés au cas d'un article 10 présentant un poids élevé, ce qui est le cas d'un panneau chauffant radiant.

On a représenté de façon schématique sur la figure 2, un système pour fixer l'article 10 sur la paroi 12. Ce système est désigné par la référence générale 14. Ce système 14 comprend une paire d'organes de liaison 16, l'un des organes de liaison 16A étant adapté pour être monté sur la paroi 12 et l'autre des organes de liaison 16B étant adapté pour être monté sur l'article 10.

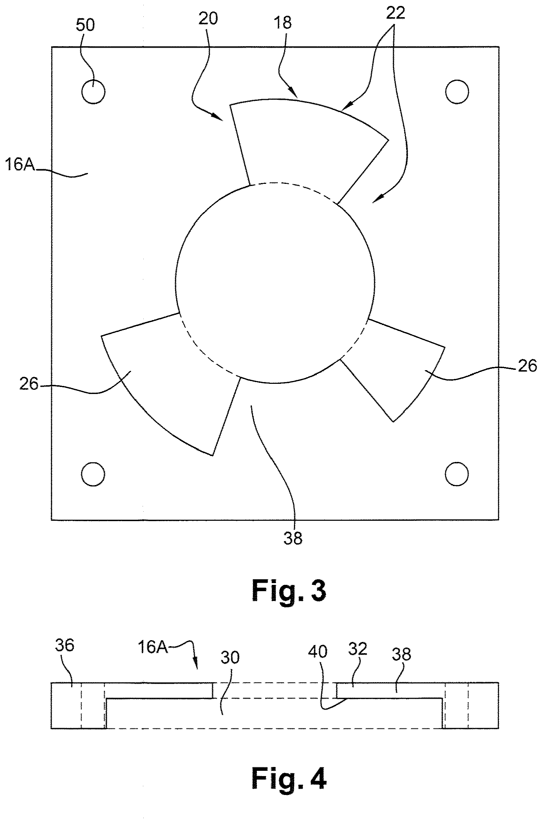

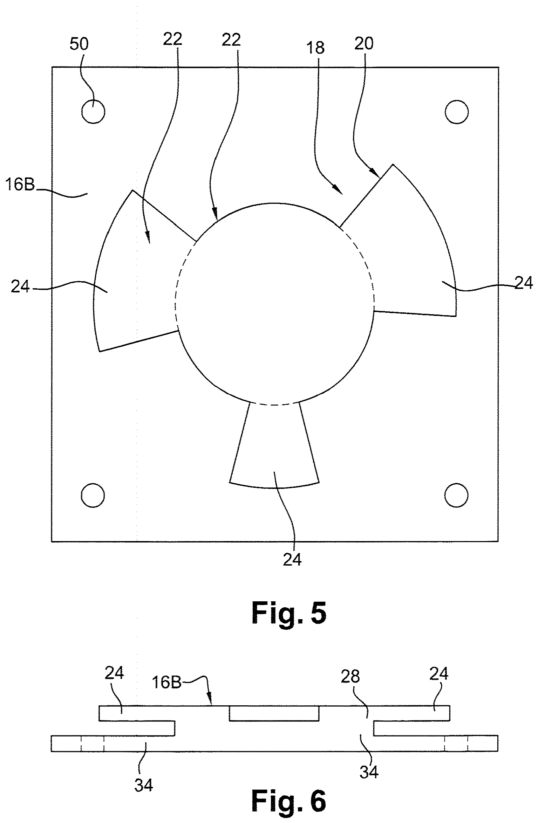

Les organes de liaison 16A, 16B sont, dans l'exemple illustré par les figures 3 et 5, fixés au moyen de vis (au nombre de quatre par exemple, non représentées) dont les trous de réception sont référencés 50. Bien entendu, en variante, les organes de liaison 16A, 16B peuvent être fixés sur leur support respectif par d'autres moyens connus, tels que de la colle ou équivalent.

Selon un mode de réalisation particulier non limitatif, ces organes de liaison 16A, 16B sont susceptibles de coopérer entre eux pour permettre le montage et la fixation de l'article 10 sur la paroi 12.

Dans l'exemple présenté dans le présent document, le système 14 permet avantageusement de repositionner l'article 10 de sa position angulaire initiale à une position angulaire finale souhaitée par rapport à l'orientation de référence, qui est dans le cas présent, la verticale V.

Ainsi, dans un mode de réalisation préféré de l'invention, le système 14 comprend des moyens 18 de rattrapage d'un jeu angulaire correspondant à la différence entre une position initiale angulaire de montage de l'article 10 sur la paroi 12 et une position angulaire finale.

Comme il apparaît plus clairement sur les figures 3 et 5, les moyens de rattrapage 18 comprennent des moyens d'engagement axial des deux organes de liaison 16A, 16B pour leur positionnement relatif dans une position angulaire d'engagement et des moyens de couplage axial 22 des deux organes 16A et 16B entre eux par une liaison rotative définie à partir de la position d'engagement et sur une amplitude angulaire prédéfinie.

De préférence, la paire d'organes de liaison 16A, 16B comprend un mécanisme d'accouplement à baïonnette formant les moyens de rattrapage 18 du jeu angulaire.

L'organe de liaison 16A destiné à être monté sur la paroi 12 comprend une structure de support 36 principale de fixation à la paroi 12 réalisée au moins partiellement dans un matériau qui permette de voir la paroi 12 au travers de l'organe de liaison 16B lorsque l'organe de liaison 16B est monté sur la paroi 12.

En outre, dans l'exemple décrit, le deuxième organe de liaison 16B comprend également une structure de support 34.

Par ailleurs, afin de réaliser l'accouplement à baïonnette, le premier organe de liaison 16A comprend une culasse 30 de liaison et le deuxième organe 16B comprend un anneau 28 de liaison.

Dans un mode de réalisation particulier, la culasse 30 de liaison comprend une cavité 30 et des moyens de retenue axiale 32 de l'anneau 28 à l'intérieur de la cavité 30 selon un fonctionnement de type à baïonnette.

Dans l'exemple illustré, la structure de support 36 comprenant la culasse 30 est percée et évidée pour délimiter la cavité 30. Par ailleurs, de préférence, l'anneau 28 de liaison est fixé sur la structure de support 34.

De préférence, les moyens de retenue axiale axial 32 comprennent une partie 38 en saillie radiale à l'intérieur de la cavité 30 formant un épaulement 40 contre lequel vient prendre appui l'anneau 28 de liaison lors de son mouvement rotatif.

Dans un mode de réalisation particulier, l'anneau 28 de liaison comprend une pluralité d'oreilles 24 de liaison et la cavité 30 comprend une pluralité d'épaulement de liaison 42, la cavité 30 délimitant une découpe conformée pour coopérer avec l'anneau 28 par engagement. Ainsi, de préférence, les moyens d'engagement axial 20 comprennent au moins une oreille 24 saillant radialement vers l'extérieur et une découpe complémentaire 26 conformée pour coopérer avec l'oreille 24 dans un sens axial. Ainsi, dans la position d'engagement, l'oreille 24 est insérée dans le sens axial dans la découpe 26.

Dans l'exemple illustré, l'épaulement 40 est configuré pour retenir axialement l'oreille 24 lors de la rotation relative des deux organes de liaison 16A, 16B.

La partie en saillie radiale 38 formant l'épaulement 40 délimite avec le fond de la cavité 30 un intervalle à l'intérieur duquel est reçu l'anneau 28. La dimension de l'intervalle est inférieure, de préférence, à l'épaisseur de l'anneau 28 afin qu'un ajustement serré soit réalisé entre les deux organes de liaison 16A, 16B. Ceci permet d'assurer un couplage axial efficace.

De préférence, l'anneau 28 et/ou la culasse 30 sont réalisés dans une matière plastique résistante à la traction et à la chaleur.

Par exemple, la structure de support 36 est réalisée en PCTG, Copolyester Amorphe polycyclohexylènediméthylène téréphtalate copolymérisé avec un autre diol (Glycol). L'anneau 28 et/ou la culasse 30 sont réalisés par exemple dans du PETg - Polyéthylène téréphtalate glycolisé.

Dans l'exemple illustré sur la figure 6, la structure de support 36 du premier organe de liaison 16A comprend un orifice traversant formant la culasse 30, cet orifice débouchant sur une surface de la paroi 12 sur laquelle le premier organe 16A est monté. Dans une variante non illustrée sur les figures, la cavité 30 est formée par un alésage. Dans ce cas, la structure de support 36 du premier organe 16A comprend un fond et la cavité 30 est borgne.

Le deuxième organe de liaison 16B comprend également encore de préférence l'anneau 28 de liaison délimitant une ou plusieurs oreilles 24 espacées les unes des autres et faisant saillie radialement vers l'extérieur à partir de la structure de support 34.

De préférence, la structure de support 34 est également réalisée dans une matière plastique sensiblement transparente ou translucide. De préférence, la structure de support 34 a une forme générale de plaque. Dans l'exemple illustré, de préférence, l'anneau 28 et la structure de support 34 du deuxième organe de liaison 16B sont formée d'une seule pièce.

Il est bien entendu qu'en variante, l'organe de liaison 16B délimitant l'anneau 28 peut être monté sur la paroi 12 et l'organe de liaison 16A délimitant la culasse 30 peut être monté sur l'article 10. Mais on comprendra bien que les organes de liaison sont interchangeables et qu'une disposition inversée peut être implémentée.

Par ailleurs, dans une variante non illustrée sur les figures, et ce dans le but de maîtriser avec précision le rattrapage de la position angulaire de l'article 10 par rapport à la paroi 12, les moyens de couplage 22 comprennent des moyens d'incrémentation angulaire pour imposer une rotation relative des deux organes de liaison 16A, 16B par incréments d'angles successifs. Par exemple, les moyens d'incrémentation angulaire comprennent un cliquet apte à coopérer par incrémentation avec une succession de dents.

De préférence, le premier organe de liaison 16A comprend une pluralité d'oreilles 24 et le deuxième organe 16B comprend une pluralité d'épaulements 40. De préférence, les oreilles 24 et les épaulements 40 respectifs sont orientés selon une symétrie radiale ou un symétrie axiale.

La plage de rattrapage angulaire est, dans ce mode de réalisation, directement liée à la dimension angulaire des parties en saillie radiale 38. En effet, le couplage rotatif des oreilles 24 et des parties en saillie radiale 38 définit la plage de rattrapage angulaire. On voit par exemple que sur la figure 3, les parties en saillie radiales 38 occupent environ un secteur angulaire de plus ou moins 45°. Sur la figure 5, on voit que les oreilles 24 occupent un secteur angulaire de plus ou moins 20 à 30°. Le rattrapage angulaire est, dans ce cas, compris entre 10° et 20°.

Dans l'exemple décrit, le système 14 comprend des moyens d'indexation angulaire propres à indiquer à un utilisateur une orientation privilégiée de montage de chaque organe de liaison 16A, 16B sur son support respectif choisi parmi la paroi 12 ou l'article 10 de manière à ce que le centre de l'amplitude angulaire prédéfinie de couplage des deux organes de liaison 16A, 16B entre eux coïncide sensiblement avec la position angulaire finale.

De préférence, le système 14 comprend des moyens à détrompeur pour définir une unique position d'engagement des deux organes de liaison 16A, 16B entre eux.

Ainsi avantageusement, comme il est représenté sur les figures 3 et 5, les oreilles 24 peuvent être différentes les unes des autres et il en est de même des découpes 26 associées de la structure de support 36.

Par ailleurs, de préférence, les moyens de rattrapage angulaire 18 comprennent des moyens d'immobilisation de la rotation des deux organes de liaison 16A, 16B dans la position angulaire souhaitée.

Par exemple, et bien que cela ne soit pas illustré sur les figures, les moyens d'immobilisation peuvent comprendre un ergot, monté sur le premier organe de liaison 16A et déplaçable radialement pour permettre de venir mordre la surface du deuxième organe de liaison 16B et bloquer la rotation des deux organes de liaison 16A, 16B entre eux.

On va maintenant décrire les principaux aspects du fonctionnement du système 14 qui vient d'être décrit.

Lors d'une première étape, les organes de liaison 16A, 16B sont fixés respectivement sur leur support respectif. Ainsi, le premier organe de liaison 16A est fixé sur la paroi 12 et le deuxième organe de liaison 16B est fixé sur l'article 10. Cette fixation est réalisée de façon simple par des moyens classiques, de façon non limitative : vis, colle, autocollant, etc. Il va de soi que le montage des deux organes de liaison 16A, 16B peut être interverti de telle manière que le premier organe de liaison 16A soit fixé sur l'article 10 et le deuxième organe de liaison 16B soit fixé sur la paroi 12.

Au cours d'une deuxième étape, on positionne temporairement la structure de support 36 sur la paroi 12 et on repère d'éventuels trous précédents de la paroi 12 en regardant au travers de la structure de support 36.

Au cours d'une troisième étape, on marque la position des trous précédents sur la structure de support 36 positionné temporairement. Puis, on retire la structure et on perce des trous dans la structure 36 sur les marquages réalisés lors de la troisième étape.

Puis au cours d'une quatrième étape, on fixe la structure de support 36 sur la paroi 12 en faisant coïncider les trous percés et les trous antérieurs déjà présents sur la paroi 12.

Enfin, au cours d'une dernière étape, on monte l'appareil de chauffage électrique 10 grâce au système 14. Ainsi, le deuxième organe de liaison 16B est d'abord engagé d'avant en arrière dans le sens axial de telle sorte que les oreilles 24 traversent les découpes 26 de l'orifice du premier organe de liaison 16A, qui sont de formes complémentaires de celles des oreilles 24. L'orifice, ainsi élargi par les découpes 26, présente donc sensiblement la forme d'une étoile à trois branches. Bien entendu, le nombre de branches de l'étoile et le nombre d'oreilles 24 peut être différent de 3 sans sortir du cadre de l'invention.

Lors du montage, la structure de support 34 et les oreilles 24 traversent d'avant en arrière les découpes de l'orifice, puis l'opérateur vient faire pivoter la structure de support 34 autour de son axe suivant un angle correspondant au jeu angulaire à rattraper.

Après cette rotation de la structure de support 34, les oreilles 24 viennent en appui par l'intermédiaire de leur face avant contre les retours de matière agencés sur la structure de support entre les découpes 26 de l'orifice. La rotation du corps 34 permet ainsi de l'amener de sa position d'engagement à la position de verrouillage axial, dans laquelle les faces avant des oreilles 24 sont en appui sur la face arrière des retours de matière.

L'opérateur peut alors effectuer une rotation plus fine afin d'amener l'article 10 dans une position relative finale souhaitée par rapport à la paroi 12.

En résumé, le procédé de montage comporte les étapes suivantes :
- on positionne provisoirement la structure de support 36, 34 sur la paroi 12,
- on repère d'éventuels trous existants de la paroi 12 en regardant au travers de la structure de support 36, 34,
- on marque la position des trous existants sur la structure de support 36, 34,
- on retire la structure de support 36, 34 et on perce des trous sur les marquages,
- on fixe la structure de support 36, 34 sur la paroi 12 en faisant coïncider les trous percés dans la structure 36, 34 et les trous existants,
- on monte l'appareil de chauffage électrique 10 avec le système 14.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Système (14) pour fixer un article (10) sur une paroi (12), du type comprenant une paire d'organes de liaison (16A, 16B), l'un des organes de liaison (16A, 16B) étant adapté pour être monté sur la paroi (12) et l'autre des organes de liaison (16A, 16B) étant adapté pour être monté sur l'article (10), les organes de liaison (16A, 16B) étant susceptibles de coopérer pour permettre le montage et la fixation de l'article (10) sur la paroi (12), l'organe de liaison (16A, 16B) destiné à être monté sur la paroi (12) comprenant une structure de support (36, 34) de fixation de l'organe (16A, 16B) à la paroi (12) réalisée au moins partiellement dans un matériau présentant des propriétés optiques qui permettent de voir la paroi (12) au travers de la structure (36, 34) lorsque l'organe (16A) est monté sur la paroi (12), le système (14) étant **caractérisé en ce qu'**il comprend des moyens (18) de rattrapage d'un jeu angulaire correspondant à la différence entre une position initiale angulaire de montage de l'article (10) sur la paroi (12) et une position angulaire finale, les moyens de rattrapage (18) comprennent des moyens (20) d'engagement axial des deux organes de liaison (16A, 16B) pour leur positionnement relatif dans une position angulaire d'engagement, et des moyens (22) de couplage axial des deux organes (16A, 16) entre eux par une liaison rotative définie à partir de la position d'engagement et sur une amplitude angulaire définie.

2. Système (14) selon la revendication 1, dans lequel la structure de support (36, 34) est réalisée dans une matière plastique sensiblement transparente ou translucide.

3. Système (14) selon l'une quelconque des revendications 1 ou 2, dans lequel la paire d'organes de liaison (16A, 16B) comprend un mécanisme d'accouplement à baïonnette.

4. Système (14) selon la revendication 3, dans lequel l'un des organes de liaison (16A, 16B) comprend un anneau (28) de liaison et l'autre des organes de liaison (16A, 16B) comprend une culasse (30) de liaison comprenant une cavité (30) et des moyens de retenue axiale (32) de l'anneau (28) à l'intérieur de la cavité (30) selon un fonctionnement de type à baïonnette.

5. Système (14) selon la revendication4, dans lequel l'anneau (28) et la structure de support (36, 34) sont formées d'une seule pièce.

6. Système (14) selon l'une quelconque des revendications 4 ou 5, dans lequel l'anneau (28) et/ou la culasse (30) sont réalisés dans une matière plastique résistante à la traction et à la chaleur.

7. Système (14) selon l'une quelconque des revendications précédentes 4 à 6, dans lequel l'anneau (18) comprend une pluralité d'oreilles (24) de liaison et la cavité (30) comprend une pluralité d'épaulements de liaison (42), la cavité (30) délimitant une découpe conformée pour coopérer avec l'anneau (28) par engagement.

8. Système (14) selon la revendication précédente, dans lequel les oreilles (24) et les épaulements (42) respectifs sont orientés selon une symétrie radiale ou une symétrie axiale.

9. Système (14) selon l'une quelconque des revendications 1 à 8, dans lequel la structure de support (36, 34) a une forme générale de plaque.

10. Appareil de chauffage électrique (10), notamment un panneau chauffant radiant, comprenant une face arrière destinée à être montée sur une paroi (12), **caractérisé en ce qu'**il comporte l'organe de liaison (16A, 16B) du système de fixation (14) selon l'une quelconque des revendications 1 à 9 qui est adapté pour être monté sur l'article (10).

11. Procédé de montage d'un appareil de chauffage électrique (10), notamment un panneau chauffant radiant, sur une paroi (12) par l'intermédiaire d'un système (14) comprenant une paire d'organes de liaison (16A, 16B) où l'un des organes de liaison (16A, 16B) est adapté pour être monté sur la paroi (12) et comprend une structure de support (36, 34) de fixation de l'organe (16A, 16B) à la paroi (12) réalisée au moins partiellement dans un matériau présentant des propriétés optiques qui permettent de voir la paroi (12) au travers de la structure (36, 34) lorsque l'organe (16A) est monté sur la paroi (12) et où l'autre des organes de liaison (16A, 16B) est adapté pour être monté sur l'appareil de chauffage (10), procédé dans lequel l'appareil de chauffage électrique (10) comprend une face arrière destinée à être montée sur la paroi (12) et comporte l'organe de liaison (16A, 16B) qui est adapté à être monté sur l'appareil de chauffage électrique (10), procédé dans lequel les organes de liaison (16A, 16B) sont susceptibles de coopérer entre eux pour permettre le montage et la fixation de l'appareil de chauffage électrique (10) sur la paroi (12) et **caractérisé en ce qu'**il comprend les étapes suivantes :
- on positionne provisoirement la structure de support (36, 34) sur la paroi (12),
- on repère d'éventuels trous existants de la paroi (12) en regardant au travers de la structure de support (36, 34),
- on marque la position des trous existants sur la structure de support (36, 34),
- on retire la structure de support (36, 34) et on perce des trous sur les marquages,
- on fixe la structure de support (36, 34) sur la paroi (12) en faisant coïncider les trous percés dans la structure (36, 34) et les trous existants,
- on monte l'appareil de chauffage électrique (10) avec le système (14).
